# EUROPEAN PATENT SPECIFICATION

(11) **EP 1 140 337 B1**
(45) Date of publication and mention of the grant of the patent: **05.02.2003**
(21) Application number: 00966149.7
(22) Date of filing: 10.10.2000
(51) Int. Cl.: B01F 3/08, B01F 15/04

(54) **APPARATUS FOR DISPENSING PREDETERMINED PROPORTIONS OF LIQUIDS OF DIFFERENT SPECIFIC WEIGHTS CONTAINED IN THE SAME TANK**
VORRICHTUNG ZUR ABGABE VON IM GLEICHEN BEHÄLTER ENTHALTENEN FLÜSSIGKEITEN UNTERSCHIEDLICHER SPEZIFISCHER GEWICHTE IN VORBESTIMMTEN MENGEN
APPAREIL DE DISTRIBUTION DE PROPORTIONS PREDETERMINEES DE LIQUIDES PRESENTANT DIFFERENTS POIDS SPECIFIQUES ET ETANT CONTENUS DANS UN MEME RESERVOIR

(30) Priority: 22.10.1999 IT GE990124
(43) Date of publication of application: 10.10.2001
(73) Proprietor: Corti, Marco, 23900 Lecco (IT); Fumagalli, Riccardo, 23848 Oggiono (IT)
(72) Inventor: Corti, Marco, 23900 Lecco (IT); Fumagalli, Riccardo, 23848 Oggiono (IT)
(74) Representative: Porsia, Dino, Dr.
(86) International application number: EP0009938
(87) International publication number: WO01030486

(56) References cited:
- FR-A- 2 774 008

## Description

The present invention relates to an apparatus for feeding predetermined proportions of liquids of different specific weights which are contained in the same tank, in particular for feeding water and solvent to apparatus for cleaning the cylinders in printing machines, The invention relates to systems for cleaning the cylinders in printing machines which are usually fitted with means for spraying a cloth or other means - which are subsequently brought into contact with the cylinder - with predetermined proportions of water and solvent in order to remove traces of paper and ink. In apparatus of known type, the water and solvent are kept in separate containers and the two liquids are cyclically sucked up and employed in the predetermined proportions using separate suction and distribution circuits. The invention proposes a major simplification to these systems by containing both the water and solvent, in the predetermined proportions, in a single tank. Since agitation of the two liquids could in certain cases cause them to become denser or coagulate, which could lead to the mixture-spraying nozzles becoming blocked or could cause other complications, the invention envisages allowing the said two liquids to separate out into layers inside the tank as a result of their specific weights and also envisages providing a submerged element of variable position inside the tank, this element having a plurality of suction holes spaced out along its entire length, having one end positioned such that it can rotate in the region of the bottom of the tank, having its upper end anchored to float means and being connected to suction means. As the level of mixture in the tank changes, the submerged element modifies its position so that its holes always remain submerged in the liquid, these holes being spaced out along the entire height of the column of the said mixture so that, each time the suction means connected to the submerged element are activated, a mixture made up of the same proportions of liquids as those fed into the tank at the outset will always come out.

Further characteristics of the invention, and the advantages deriving therefrom, will be more clearly apparent on reading the following description of a preferred embodiment of the said invention, illustrated purely by way of non-limiting example in the figures of the attached sheets of drawings, in which:
- Fig. 1 illustrates a perspective view - partially cut away to show the internal components - of the tank for the mixture of liquids, with the submerged element of variable position shown in its position of maximum elevation, i.e. when the tank is full;
- Figs 2, 3, 4, and 5, 6, 7 illustrate the tank sectioned through its height and the various positions of the submerged element during use of the mixture, respectively with the mixture made up of 50% water and 50% solvent and with the mixture made up of 70% water and 30% solvent;
- Fig. 8 illustrates the tank sectioned through its height and with the liquid mixture in a state where it has separated out into differentiated layers, which could, for example, occur soon after a new supply of mixture is fed into the said tank; and
- Figs 9 and 10 illustrate two variant embodiments of the apparatus, with the suction unit positioned horizontally and vertically, respectively.

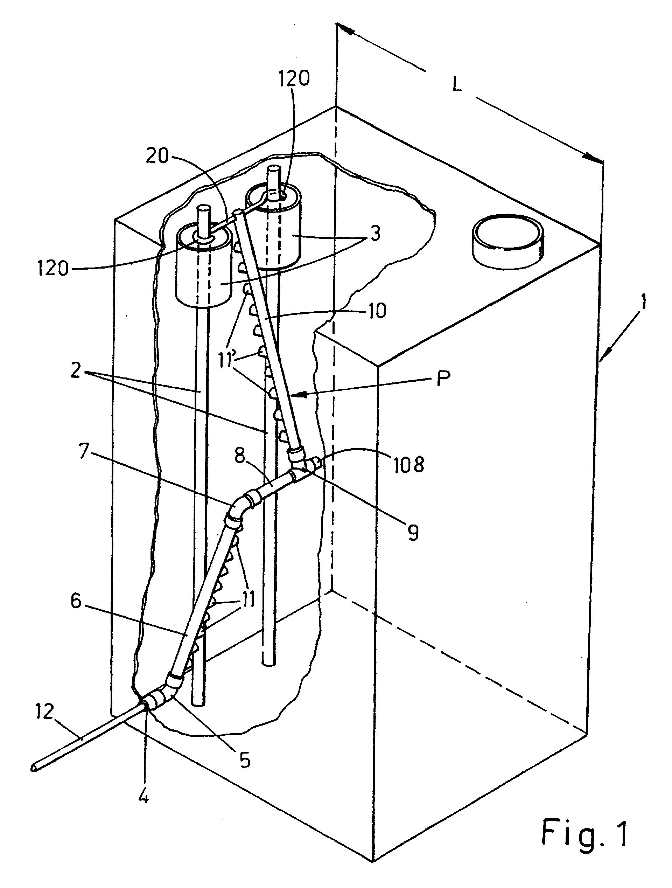

Figure 1 shows that floats 3 are mounted inside the tank 1 so that they can slide on a pair of guide rods 2 which are, for example, positioned along a side wall of the said tank. A hole 4 is formed in one of the walls of the tank adjacent to the wall close to the guides 2, in line with the said guides, which hole 4 is preferably suitably raised off the bottom of the tank in order to prevent any dirt, which by its very nature tends to precipitate there (see below), from being sucked up. Passing through the hole 4, with a side seal and such that it can rotate, is an elbow joint 5 which, at its end located inside the tank, is fixed to and communicates with a tube 6 whose length is preferably shorter than the width L of the said tank. The other end of this tube is fixed to and communicates with an elbow joint 7, in turn fixed to and communicating with a horizontal extension 8 which is closed for example at the end 108 and which is in turn hinged to and communicates with the head end of a T joint 9, the leg of which is connected to and communicates with a tube 10 of length approximately equal to that of the first tube 6 and essentially lying in a plane midway between the guides 2. The tube 10 is closed at its upper end, at which point a round crossbar 20 passes rotatably through it, its looped ends 120 encircling the guides 2 in a slidable manner and resting on the floats 3. The tubes 6 and 10 have a series of holes 11, 11' evenly spaced out along their entire length with a small filter being mounted in each hole; alternatively, the said tubes are made from a suitable sintered material so that they are able to suck up the liquids uniformly along their entire length. In the example shown in Figure 1, the tubes 6 and 10 have an internal diameter of 6 mm and each has ten holes 11, 11', for example 0.8 mm in diameter and spaced approximately 20 mm apart. A suction hole can optionally also be provided on the end 108 of the extension 8. So that the system in question can operate correctly, it is necessary for the sum total of the cross sections of the holes 11, 11' of the entire hinged submerged element P, made for example in the manner described, to be less than or equal to the internal cross section of the said submerged element.

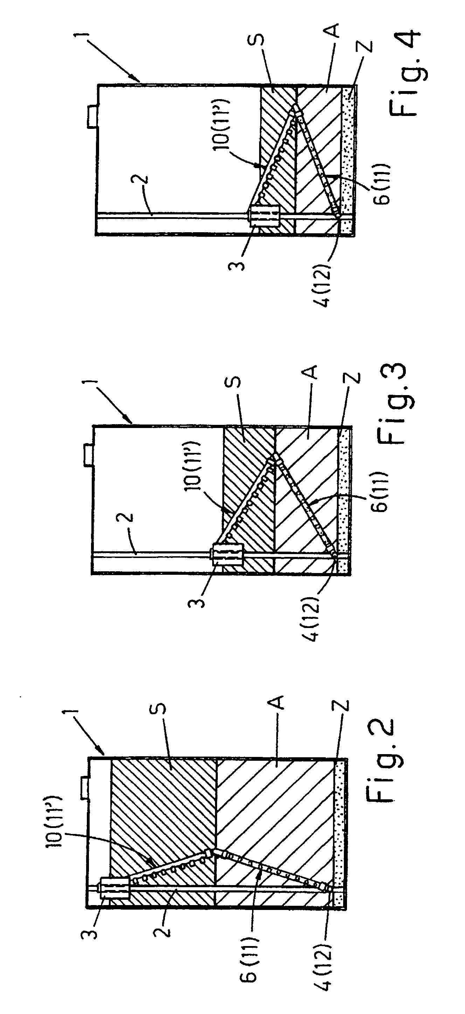

The submerged element P is connected, via at least any one intermediate or end point, for example via the elbow joint 5, to the suction pipe 12 of any suitable pump (see below). In order to understand how the apparatus described operates, the reader's attention is firstly directed to Figure 2, which shows that the tank 1 contains a quantity of liquid made up of 50% water and 50% solvent. Under rest conditions the layer of solvent S settles above the layer of water A which has a greater specific weight. When the tank is full, as shown in Figure 2, the tubes 6 and 10 are in an essentially vertical position, with the tube 6 submerged in the layer of water A and the tube 10 submerged in the layer of solvent S. By applying suction to the pipe 12 a mixture made up of 50% water and 50% solvent comes out of the latter. As the level of liquid in the tank 1 falls, as illustrated successively in Figures 3 and 4, the floats 3 drop and the tubes 6 and 10 become inclined, with each remaining in its respective layer A or S, so that a mixture of liquid made up of half water and half solvent always comes out of the pipe 12.

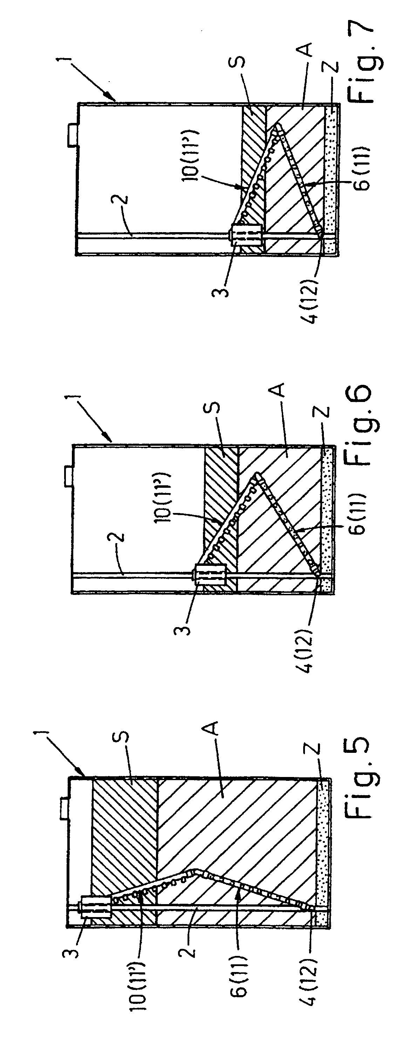

If the proportions of water and solvent in the tank 1 are changed, for example as illustrated in Figure 5 which shows a case in which the liquid load is made up of 70% water and 30% solvent, it can be seen that the submerged element P formed by the tubes 6 and 10 is positioned such that approximately 70% of the holes 11, 11' are located in the lower layer A and the remaining 30% of the holes 11' are located in the upper layer S. This state is automatically maintained as the level of liquid in the tank gradually drops, as illustrated successively in Figures 6 and 7, so that a mixture made up of 70% water and 30% solvent will always come out of the suction pipe 12.

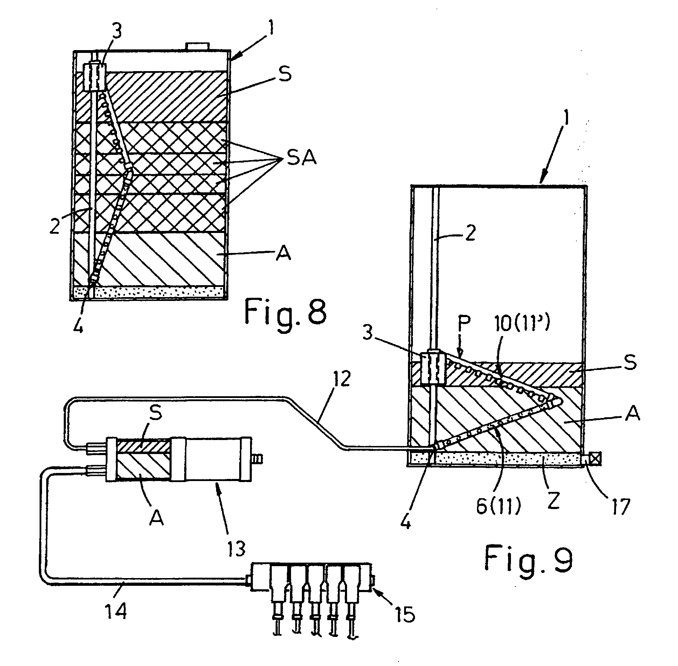

If the suction pipe 12 is activated immediately after a new quantity of mixture which has been stirred beforehand is fed into the tank 1, the system in question would still operate correctly since a mixture with an equal proportion of water and solvent would enter through all the holes 11, 11'. A short time after the new supply of mixture had been fed into the tank 1, the condition illustrated in Figure 8 would apply, with an upper solvent-rich layer S, a lower water-rich layer A and intermediate layers SA having different proportions of water and solvent. In this situation too, the system would operate correctly since the holes 11, 11' in the submerged element are spaced out along the entire height of the column of liquid fed into the tank, so that a mixture made up of the same proportions of water and solvent as the new supply of mixture fed into the tank would always come out of the suction pipe 12.

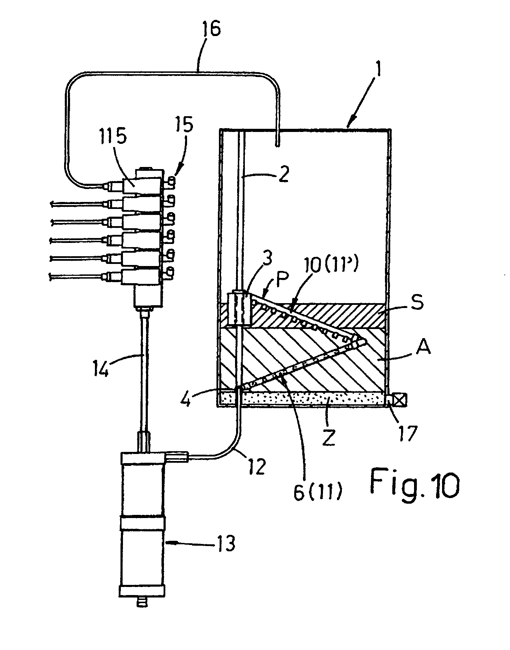

Figures 9 and 10 illustrate that the pipe 12 can be connected to a positive-displacement pump 13, for example of reciprocating type, which is connected via its discharge pipe 14 to the set of solenoid valves 15 which feed the mixture of water and solvent to the apparatus for cleaning the printing cylinders. If a quantity of mixture is left in the pumping circuit at the end of a cycle, this mixture would tend to separate out into layers. If the pump, the solenoid valves and the associated pipes 12 and 14 are positioned horizontally as shown in Figure 9, the fact that the residue separates out into layers does not cause any problems since the next time the said pump is started up, the two layers of liquid come out mixed together. Contrary to the illustration in Figure 9, the couplings between the pipes 12 and 14 and the pump 13 are positioned in a horizontal imaginary plane. If, on the other hand, the pump 13, the valves 15 and the associated pipes 12 and 14 are positioned vertically, as shown in Figure 10 - given that the residual mixture would tend to separate out into layers and that, the next time the said pump was started up, first the solvent and then the water would come out of the pumping system - provision would have to be made in that case for an additional solenoid valve 115 to be activated at the end of the cycle, which valve would connect the discharge pipe 14 of the pump to a re-circulating pipe 16 which would discharge into the tank 1. Provision would also have to be made for the pump 13 to complete its delivery stroke so that any residual mixture is discharged into the said tank. At the beginning of the next cycle - given that liquid from the previous cycle has been left and has separated out inside the delivery pipe 14 and in the vertically positioned solenoid valves - provision would have to be made, once the pump 13 has sucked up the mixture from the tank 1, for an initial part of the first delivery stroke of the said pump to take place with the solenoid valve 115 activated, so that the said residual liquid inside the pipe 14 can be discharged into the tank 1, after which operation the solenoid valve 115 would be closed and the solenoid valves 15 would be activated in the preestablished order, while the pump remains activated. It goes without saying that instead of the solenoid valve 115 other suitable valve means can be used, for example a throttle which has been set at a pressure greater than the operating pressure of the user machine connected to the solenoid valves 15 and which, via its pipe 16, is in constant communication with the tank 1.

Having made repeated observations, it has been found that the problems mentioned above in connection with the liquids separating out are nevertheless minimized by the fact that the mixture coming out of the submerged element P described in the present invention tends to remain stable for at least twelve hours, presumably by virtue of the vigorous and uniform mixing that the liquid undergoes, first as it passes through the holes 11, 11' and then as it passes through the submerged element P, as a result of the fact that there is a pressure drop inside the pipe 12 of about approximately 1 bar. Needless to say, a pump of any other suitable type may be employed in place of the positive-displacement pump 13.

It is clear from Figures 9 and 10 that, by keeping the hole 4 suitably raised off the bottom of the tank, it is possible to keep the suction circuit separate from the dirt which tends to precipitate on the bottom layer Z of the said tank and which can be periodically drained off via a drainage tap 17.

It should be understood that the description referred to a preferred embodiment of the invention, to which numerous variations and modifications can be made, especially structural ones, which could, for example, apply to the submerged element P which could be made differently - with a single rigid tube to fit inside a very wide tank, or with more than two rigid tubes which are hinged together, or with one or more flexible tubes.

## Claims

1. Apparatus for feeding predetermined proportions of liquids of different specific weights which are contained in the same tank (1), **characterized in that** it comprises at least one pipe which acts as a submerged element (P) inside the tank, has a plurality of suction holes (11, 11') along its entire length, is connected at its upper end to float means (3) and is positioned at its lower end in the region of the bottom of the said tank, at which point that end is able to pivot so that, irrespective of the height of the column of liquid present in the tank, the submerged element always passes through the entire height of the column and all its holes always remain submerged in the said column, the said submerged element being connected, via at least any one intermediate and/or end point, to suction means (12, 13), the whole apparatus being made such that, when a mixture made up of the desired proportions of the two liquids is fed into the tank, and when or if these liquids separate out into layers as a result of their different specific weights, a portion of the submerged element (P) of length directly proportional to the thickness of the said layer remains positioned within each layer (S, A, SA) of the column of liquid so that, at any given moment, it is possible to suck up a mixture made up of the predetermined proportions of the two liquids via the submerged element.

2. Apparatus according to Claim 1), **characterized in that** the submerged element (P) has a plurality of holes (11, 11') along its entire length which are spaced a suitable distance apart and optionally contain a filter.

3. Apparatus according to Claim 1), **characterized in that** the submerged element (P) is made wholly or partly from sintered tube.

4. Apparatus according to the preceding claims, in which the sum of the cross sections of the suction holes (11, 11') in the submerged element (P) does not exceed the internal cross section of the said submerged element.

5. Apparatus according to the preceding claims, **characterized in that** the lower hinged end of the submerged element (P) is positioned far enough off the bottom of the tank (1) to enable a lower zone (Z) to be formed in the latter, where any impurities from the mixture can collect, the said zone being permanently out of reach of the submerged element and preferably fitted with a drainage outlet (17).

6. Apparatus according to the preceding claims, **characterized in that** the submerged element (P) is formed by two tubes (6, 10) of equal length which are hinged together and intercommunicating.

7. Apparatus according to Claim 6), in which the lower tube (6) which forms the submerged element is connected via its ends to elbow joints (5, 7), the lower one (5) of which passes rotatably and in a leaktight manner through a side hole (4) in the tank and is connected to suction means (12, 13), while the upper elbow joint is connected to a small extension (8) which is positioned transversely inside the tank and is closed at its free end (108), on which extension the head end of an upturned T joint (9) is rotatably mounted and with which it intercommunicates, the end of the leg of this T joint (9) being connected to the second pipe (10) of the submerged element which is connected at the top to the float means (3).

8. Apparatus according to Claim 7), in which the upper end of the upper tube (10) of the submerged element is blind and has a crossbar (20) with a round cross section passing rotatably through it, this crossbar having looped ends (120) which slide on vertical guides (2) and rest on respective floats (3) which themselves slide on the said fixed guides inside the tank.

9. Apparatus according to Claim 1) particularly suitable for feeding water and solvent to systems for cleaning the cylinders in printing machines, **characterized in that** a pump (13) of any suitable type is used to suck up the mixture of liquids through the submerged element (P) in the tank (1) and to feed the said mixture to the set of valves (15) which feed the units for cleaning the printing cylinders.

10. Apparatus according to Claim 9), in which the pump (13) is a positive-displacement pump, for example of reciprocating type.

11. Apparatus according to Claim 9), **characterized in that**, if the solenoid valves (15), the pump (13) and the associated suction and delivery pipes (12, 14) are positioned wholly or partly vertically, an additional valve means (115) is provided which is connected to a re-circulating pipe (16) which discharges into the tank, and provision is made for the said pump (13) to discharge the residual mixture from a previous operating cycle into the tank via the said additional valve means and via the said re-circulating pipe, at the end and at the beginning of each cycle for feeding the apparatus for cleaning the printing cylinders.

## Revendications

1. Appareil de distribution de proportions prédéterminées de liquides de différents poids spécifiques qui sont contenus dans le même réservoir (1), **caractérisé en ce qu'**il comporte au moins un tuyau qui agit comme un élément immergé (P) à l'intérieur du réservoir, possède plusieurs trous d'aspiration (11, 11') sur toute sa longueur, est connecté à son extrémité supérieure à des moyens de flottaison (3) et est positionné à son extrémité inférieure au fond dudit réservoir, de manière que cette extrémité soit susceptible de pivoter afin que, quelle que soit la hauteur de la colonne liquide présente dans le réservoir, l'élément immergé reste toujours en dessous du niveau liquide et tous les trous restent toujours immergés dans ladite colonne, ledit élément immergé étant connecté, via au moins l'une des extrémités, à des moyens d'aspiration (12, 13), l'ensemble de l'appareil étant agencé de manière à ce que, lorsqu'un mélange constitué des deux liquides en proportions désirées est introduit dans le réservoir, et lorsque ou si ces liquides se séparent en couches du fait de leurs poids spécifiques différents, une partie de l'élément immergé (P) de longueur directement proportionnelle à l'épaisseur de ladite couche reste positionnée dans chaque couche (S, A, SA) de la colonne liquide de sorte que, à tout moment, il est possible d'aspirer un mélange formé à partir des proportions prédéterminées des deux liquides via l'élément immergé.

2. Appareil selon la revendication 1, **caractérisé en ce que** l'élément immergé (P) possède plusieurs trous (11, 11') sur toute sa longueur, qui sont espacés à des distances appropriées et contiennent facultativement un filtre.

3. Appareil selon la revendication 1, **caractérisé en ce que** l'élément immergé (P) est constitué en tout ou partie d'un tube fritté.

4. Appareil selon les précédentes revendications, dans lequel la somme des sections des trous d'aspiration (11,11') dans l'élément immergé (P) ne dépasse pas la section interne dudit élément immergé.

5. Appareil selon les précédentes revendications, **caractérisé en ce que** l'extrémité articulée inférieure de l'élément immergé (P) est placée assez loin du fond du réservoir (1) pour permettre de constituer une zone inférieure (Z) dans le fond, où toutes les impuretés du mélange pourront se déposer, ladite zone étant en permanence hors de portée de l'élément immergé et, de préférence, équipée d'une sortie de drainage (17).

6. Appareil selon les précédentes revendications, **caractérisé en ce que** l'élément immergé (P) est formé de deux tubes (6, 10) de longueur égale qui sont articulés l'un sur l'autre et qui communiquent entre eux.

7. Appareil selon la revendication 6), dans lequel le tube inférieur (6) qui forme l'élément immergé est connecté via ses extrémités à des coudes de liaison (5, 7), le coude inférieur (5) passant de manière rotative et étanche dans un trou latéral (4) dans le réservoir et est connecté à des moyens d'aspiration (12, 13), alors que le coude supérieur est connecté à un petit prolongement (8) qui est positionné transversalement à l'intérieur du réservoir et est fermé à son extrémité libre (108), sur ledit prolongement étant montée rotative l'extrémité de tête d'un joint en T (9) dirigé vers le haut, ledit prolongement communiquant avec le joint en T, et l'extrémité du conduit de ce joint en T (9) étant connectée au second tube (10) de l'élément immergé qui est relié en partie supérieure aux moyens de flottaison (3).

8. Appareil selon la revendication 7, dans lequel l'extrémité supérieure du tube supérieur (10) de l'élément immergé est borgne et munie d'une tige transversale (20) de section circulaire traversant de manière rotative ledit tube, ladite tige transversale comportant des extrémités en forme de boucle (120) qui coulissent sur des supports verticaux (2) et reposent sur des flotteurs respectifs (3) qui eux même coulissent sur lesdits supports fixés à l'intérieur du réservoir.

9. Appareil selon la revendication 1 particulièrement destiné à la distribution d'eau et de solvant à des systèmes pour nettoyer les cylindres d'imprimantes, **caractérisé en ce qu'**une pompe (13) de tout type approprié est utilisé pour aspirer le mélange de liquides à travers l'élément immergé (P) dans le réservoir (1) et pour distribuer ledit mélange à des ensembles de soupapes (15) qui alimentent les unités de nettoyage des cylindres d'impression.

10. Appareil selon la revendication 9, dans lequel la pompe (13) est une pompe volumétrique, du type alternatif par exemple.

11. Appareil selon la revendication 9, **caractérisé en ce que** si les électrovannes (15), la pompe (13) et les tuyaux d'aspiration et d'approvisionnement associés (12, 14) sont positionnés en tout ou en partie verticalement, une soupape additionnelle (115) est prévue et est connectée à un tuyau de re-circulation (16) qui décharge dans le réservoir, et une réserve est constituée pour ladite pompe (13) pour décharger le mélange résiduel d'un cycle de fonctionnement précédent dans le réservoir via ladite soupape additionnelle et via ledit tuyau de re-circulation, à la fin et au début de chaque cycle de distribution de l'appareil de nettoyage des cylindres d'impression.

## Patentansprüche

1. Vorrichtung zur Abgabe von vorbestimmten Mengen von Flüssigkeiten mit verschiedenen spezifischen Gewichten, die im gleichen Behälter (1) enthalten sind, **dadurch gekennzeichnet, dass** sie mindestens ein Rohr umfasst, das als ein eingetauchtes Element (P) innerhalb des Behälters wirkt, auf seiner gesamten Länge eine Vielzahl von Sauglöchern (11, 11') aufweist, an seinem oberen Ende mit Schwimmkörpern (3) verbunden ist und an seinem unteren Ende im Bereich des Bodens des Behälters gelagert ist, wobei dieses Ende an diesem Punkt drehen kann, so dass das eingetauchte Element, unabhängig von der Höhe der Flüssigkeitssäule im Behälter, immer durch die gesamte Höhe der Flüssigkeitssäule läuft und seine Löcher immer in dieser Flüssigkeitssäule eingetaucht bleiben, wobei das eingetauchte Element über mindestens einen Zwischen- und/oder Endpunkt mit Saugvorrichtungen (12, 13) verbunden ist, und dass die gesamte Vorrichtung so ausgeführt ist, dass, wenn eine Mischung aus den gewünschten Anteilen der zwei Flüssigkeiten in den Behälter gefüllt wird, und wenn oder falls diese Flüssigkeiten sich aufgrund ihres verschiedenen spezifischen Gewichts in Schichten auftrennen, ein Teil des eingetauchten Elements (P), dessen Länge zur Dicke dieser Schicht direkt proportional ist, innerhalb jeder einzelnen Schicht (S, A, SA) der Flüssigkeitssäule verbleibt, so dass es zu jedem beliebigen Zeitpunkt möglich ist, eine aus den vorbestimmten Mengen der zwei Flüssigkeiten bestehende Mischung durch das eingetauchte Element anzusaugen.

2. Vorrichtung nach Anspruch 1, **dadurch gekennzeichnet, dass** das eingetauchte Element (P) auf seiner gesamten Länge eine Vielzahl von Löchern (11, 11') besitzt, die in geeignetem Abstand voneinander angeordnet sind und wahlweise ein Filter umfassen.

3. Vorrichtung nach Anspruch 1, **dadurch gekennzeichnet, dass** das eingetauchte Element (P) ganz oder teilweise aus gesintertem Rohr hergestellt ist.

4. Vorrichtung nach den vorhergehenden Ansprüchen, bei der die Summe der Querschnitte der Sauglöcher (11, 11') in dem eingetauchten Element (P) den internen Querschnitt des eingetauchten Elements nicht übersteigt.

5. Vorrichtung nach den vorhergehenden Ansprüchen, **dadurch gekennzeichnet, dass** das mit Scharnier versehene untere Ende des eingetauchten Elements (P) weit genug vom Boden des Behälters (1) entfernt angeordnet ist, um die Bildung eines unteren Bereichs (Z) in diesem letzteren zu ermöglichen, wo irgendwelche Verunreinigungen aus der Mischung sich sammeln können, wobei dieser Bereich dauerhaft außerhalb der Reichweite des eingetauchten Elements liegt und vorzugsweise mit einer Entleerungsöffnung (17) ausgestattet ist.

6. Vorrichtung nach den vorhergehenden Ansprüchen, **dadurch gekennzeichnet, dass** das eingetauchte Element (P) durch zwei Rohre (6, 10) gleicher Länge gebildet ist, die gelenkig miteinander verbunden sind und miteinander kommunizieren.

7. Vorrichtung nach Anspruch 6, bei der das untere Rohr (6) des eingetauchten Element an seinen Enden mit Winkeln (5, 7) verbunden ist, von denen der untere (5) drehbar und tropfdicht durch eine Seitenöffnung (4) im Behälter läuft und mit Saugvorrichtungen (12, 13) verbunden ist, während der obere Winkel mit einer kleinen Verlängerung (8) verbunden ist, die querlaufend im Innern des Behälters angeordnet und an ihrem freien Ende (108) verschlossen ist; an dieser Verlängerung ist das Kopfende eines nach oben gewandten T-Gelenks (9) drehbar montiert und kommuniziert mit ihr, wobei das Ende des Schenkels dieses T-Gelenks (9) mit dem zweiten Rohr (10) des eingetauchten Elements verbunden ist, das am oberen Ende mit den Schwimmkörpern (3) verbunden ist.

8. Vorrichtung nach Anspruch 7, bei der das obere Ende des oberen Rohrs (10) des eingetauchten Elements verschlossen ist und eine Querstück mit rundem Querschnitt trägt, das drehbar durch es hindurchläuft, wobei dieses Querstück schleifenförmige Enden (120) hat, die auf vertikalen Führungen (2) gleiten und jeweils auf Schwimmkörpern (3) aufliegen, die ihrerseits auf den festen Führungen im Innern des Behälters gleiten.

9. Vorrichtung nach Anspruch 1, die speziell geeignet ist, Wasser und Lösungsmittel in Reinigungssysteme für Zylinder von Druckmaschinen zu füllen, **dadurch gekennzeichnet, dass** eine Pumpe (13) eines beliebigen geeigneten Typs eingesetzt wird, um die Flüssigkeitsmischung durch das eingetauchte Element (P) im Behälter (1) anzusaugen und diese Mischung in die Gruppe von Ventilen (15) einzufüllen, die die Einheiten zum Reinigen der Druckzylinder versorgen.

10. Vorrichtung nach Anspruch 9, bei der die Pumpe (13) eine Verdrängerpumpe ist, zum Beispiel des Kolbenpumpen-Typs.

11. Vorrichtung nach Anspruch 9, **dadurch gekennzeichnet, dass,** wenn die Magnetventile (15), die Pumpe (13) und die zugeordneten Saug- und Abgaberohre (12, 14) ganz oder teilweise vertikal angeordnet sind, eine zusätzliche Ventilvorrichtung (115) vorgesehen ist, die mit einem Rückführrohr (16) verbunden ist, das in den Behälter entleert, und eine Einrichtung vorgesehen ist, damit die Pumpe (13) die von einem vorhergehenden Arbeitstakt übriggebliebene Mischung über die zusätzliche Ventilvorrichtung und über das Rückführrohr in den Behälter entleert, und zwar am Ende und am Anfang jedes Arbeitstakts zum Versorgen der Vorrichtung zum Reinigen der Druckzylinder.
